(19) Europäisches Patentamt
European Patent Office
Office européen des brevets

(11) Publication number: **0 191 248**
**A1**

(12) # EUROPEAN PATENT APPLICATION

(21) Application number: **85309483.7**

(22) Date of filing: **24.12.85**

(51) Int. Cl.⁴: **H 01 M 4/68**, H 01 M 10/06, C 25 B 11/04, C 25 C 7/02 // B32B7/02, B32B15/04

(30) Priority: **11.01.85 US 690730**

(43) Date of publication of application: **20.08.86 Bulletin 86/34**

(84) Designated Contracting States: **BE DE FR GB NL SE**

(71) Applicant: **E.I. DU PONT DE NEMOURS AND COMPANY, 1007 Market Street, Wilmington Delaware 19898 (US)**

(72) Inventor: **Grot, Walther G., R.D. 1, Chadds Ford Pennsylvania 19317 (US)**
Inventor: **Vasta, Joseph Anthony, 1412 Jan Drive Webster Farms, Wilmington Delaware 19803 (US)**

(74) Representative: **Woodcraft, David Charles et al, BROOKES & MARTIN High Holborn House 52/54 High Holborn, London, WC1V 6SE (GB)**

(54) **Improved coated electrodes for use in electrochemical reactions.**

(57) An improved electrode for use in electrochemical reactions such as take place in lead-acid storage batteries and nickel plating baths; where an improvement is the use of a coated electrode having an electronically conductive coating about 10–200 microns thick; the coating contains, a film-forming binder selected from the following group: acrylic/polysiloxane polymer blend, a chlorosulfonated polyethylene/epoxy resin blend, a chlorosulfonated ethylene vinyl acetate polymer/epoxy resin blend, copolymer of vinylidene fluoride/hexafluoropropylene, polytetrafluoroethylene, copolymer of tetrafluoroethylene/perfluoroalkoxy vinyl ether, copolymer of tetrafluoroethylene and hexafluoro propylene, polyvinylidene fluoride, fluorinated dioxole polymer, copolymer of fluorinated dioxole/tetrafluoroethylene, copolymer of fluorinated dioxole/vinylidene fluoride, copolymer of fluorinated dioxole/chlorotrifluoroethylene; and electronically conductive, finely divided filler material in a filler-to-binder weight ratio of about 50/100 to 300/100 and the binder containing filler has an electrical volume resistivity of about 0.1–50 ohm.cm.

EP 0 191 248 A1

SUMMARY OF THE INVENTION

An improved electrode for use in electrochemical reactions; wherein the improvement comprises the use of an electrode that has a protective electronically conductive coating about 10-200 microns thick; the coating comprises a film-forming binder that is selected from the following group:

an acrylic polymer/polysiloxane blend, a chlorosulfonated polyethylene/epoxy resin blend, a chlorosulfonated ethylene vinyl acetate polymer/epoxy resin blend, copolymer of vinylidene fluoride/hexafluoropropylene; polytetrafluoroethylene, copolymer of tetrafluoroethylene/perfluoroalkoxyvinyl ether, copolymer of tetrafluoroethylene and hexafluoropropylene, polyvinylidene fluoride, fluorinated dioxole polymer, copolymer of fluorinated dioxole/tetrafluoroethylene, copolymer of fluorinated dioxole/vinylidene fluoride, copolymer of fluorinated dioxole/chlorotrifluoroethylene; and

electronically conductive finely divided filler material in a filler-to-binder weight ratio of about 50/100 to 300/100 and the binder containing filler has an electrical volume resistivity of about 0.1-50 ohm.cm.

Detailed Description of the Invention

This invention is directed to a coated electrode for use in electrochemical reactions that has a conductive substrate with a conductive coating, about 10-200 microns thick. The coating comprises a film-forming binder which is inert to the corrosive medium typically used in the electrochemical reaction and contains electronically conductive, finely divided filler materials.

Electrochemical reactions which subject electrodes to corrosive materials are used in the following: chrome plating bath, electrowinniing cells for the recovery of metals, lead-acid storage batteries and the like. Underground pipe lines are often protected by making them cathodic, and anodes connected to the pipe line are buried in the ground and are subject to corrosion. In the above, the electrodes used are subject to acids and corrosive conditions and currently require electrodes that are non-corroding and very expensive, such as stainless steel or titanium metal or extra heavy duty electrodes so that failure does not occur within an unacceptable period. By providing a conductive and protective coating, less expensive electrodes could be used or smaller and lighter weight electrodes could be used. One typical example is the lead-acid storage batteries.

Lead-acid storage batteries generally use lead alloy grids for electrodes, and use sulfuric acid as the electrolyte. The corrosion rate of these grids which typically are lead alloys of antimony or calcium can be reduced from one half to one third by coating these grids with one of the above conductive coatings.

There are a number of advantages to using coated grids in batteries in comparison to conventional batteries that typically do not use coated grids. The battery life can be increased from 2-3 times without changing the battery since corrosion failure of the grid is substantially reduced and is one of the reasons for battery failure. The power output of a battery can be increased without a change in battery size and weight since thinner grids can be used which will have the same life as the thicker and heavier grids that are

currently used. Size and weight of a battery can be reduced and the battery life will be the same as conventional batteries since thinner and lighter coated grids are used.

Typical coating compositions used to form coatings on electrodes contain 10-80% by weight of a film-forming binder, 20-90% by weight of a liquid carrier, and electronically conductive filler material in a filler-to-binder weight ratio of about 50/100 to 300/100. Preferably, the composition contains 40-70% by weight of the film-forming binder, 30-60% by weight of the liquid carrier, and filler material in the above ratio. Generally, the liquid carrier is an organic solvent for the binder. The carrier can be aqueous to form a dispersion or a blend of a nonsolvent and solvent for the binder to form a nonaqueous dispersion.

To be an effective coating for electrodes, the coating must be electronically conductive and have a low volume resistivity. The composition of the coating of binder and filler in its dried state has an electronic volume resistivity of about 0.1-50 ohms.cm. and preferably, 0.2-20 ohms.cm.

Typical conductive filler materials are carbonaceous pigments, such as carbon black pigments like furnace black, acetylene black, and graphite. One preferred carbon black pigment is Gulf acetylene black. Preferably, a mixture of carbon black pigments and finely divided graphite are used. Transition metal oxides are also useful conductive filler materials, such as lead dioxide, magnetite, titanium suboxide having the formula $TiO_x$ where x is less than 2, ruthenium oxides, mixed titanium and ruthenium oxide pigments and the like. Powdered metals such as titanium sponge, powdered

zirconium and tantalum alone or in combination with graphite also can be used.

One useful coating composition has a film-forming binder of a blend of about 20-90% by weight of an acrylic polymer and 10-80% by weight of a polysiloxane. Preferably, the composition contains about 50-75% by weight of the acrylic polymer and 25-50% by weight of the polysiloxane.

The acrylic polymer contains about 10-50% by weight, of polymerized glycidyl methacrylate or glycidyl acrylate and 50-90% by weight of other polymerized ethylenically unsaturated monomers such as alkyl methacrylates, alkyl acrylates, styrene or alkyl substituted styrenes or mixtures thereof; wherein the acrylic polymer has a weight average molecular weight of about 10,000-100,000 determined by gel permeation chromatography using polymethylmethacrylate as a standard.

The polysiloxane has attached to silicone atoms of its backbone alkyl groups with 1-6 carbon atoms, phenyl groups and hydroxyl groups and containing sufficient hydroxyl groups to provide a silanol content of about 0.5-7% by weight.

In general, the acrylic polymer must be compatible with the polysiloxane and contain a sufficient number of reactive groups, primarily glycidyl groups, to crosslink with the polysiloxane under ambient temperatures after the coating compositions has been applied to a substrate. The acrylic polymer should have a glass transition temperature of about 20°C to 50°C. A number average molecular weight of about 2,000 to 20,000, a weight average molecular weight of about 10,000 to

100,000 and a molecular weight distribution of about 2 to 5.

The glass transition temperature of the polymer is determined by differential scanning colorimetry or is calculated.

The acrylic polymer is prepared by conventional polymerization procedure in which monomers, catalyst and solvent are charged into a conventional polymerization vessel and reacted at about 60 to 175°C for about 1-6 hours to form the polymer.

Typical solvents which are used to prepare the acrylic polymer are the following: toluene, ethyl acetate, acetone, methyl isobutyl ketone, methylethyl ketone, ethyl alcohol, mineral spirits, ethylene glycol monoethyl ether acetate, and other aliphatic, cycloaliphatic and aromatic hydrocarbon, esters, ethers, ketones and alcohols which are conveniently used.

About 0.1-4% by weight, based on the weight of the monomers, of the polymerization catalyst is used to prepare the acrylic polymer. Typical catalysts are: azobis-isobutyronitrile, azo-bis(gamma dimethyl valeronitrile), benzoyl peroxide, t-butyl pivalate and the like.

Preferably, the acrylic polymer contains about 10-30% by weight of glycidyl methacrylate or glycidyl acrylate and 70-90% by weight of other ethylenically unsaturated monomers.

Typical ethylenically unsaturated monomers that are used to form the acrylic polymer are as follows: alkyl methacrylates having 1-12 carbon atoms such as methyl

methacrylate, ethyl methacrylate, butyl methacrylate, hexyl methacrylate, 2-ethylhexyl methacrylate, nonylmethacrylate, lauryl methacrylate, cyclohexyl methacrylate, isodecyl methacrylate, propyl methacrylate, phenyl methacrylate, isobornyl methacrylate and the like; alkyl acrylates having 1-12 carbon atoms in the alkyl group such as methyl acrylate, ethyl acrylate, propyl acrylate, isopropyl acrylate, butyl acrylate, isobutyl acrylate, hexyl acrylate, 2-ethylhexyl acrylate, nonyl acrylate, lauryl acrylate, cyclohexyl acrylate, isodecyl acrylate, phenyl acrylate, isobornyl acrylate and the like; styrene, alkyl substitued styrene such as methyl styrene, t-butyl styrene, vinyl toluene.

One preferred acrylic polymer contains about 10-30% by weight of glycidyl methacrylate, 10-20% by weight of styrene, 50-60% by weight of butyl methacrylate and 5-20% by weight butyl acrylate. One particularly preferred acrylic polymer contains 20% by weight glycidyl methacrylate, 15% by weight sytrene, 55% by weight butyl methacrylate and 10% by weight butyl acrylate.

The polysiloxane contains the following units

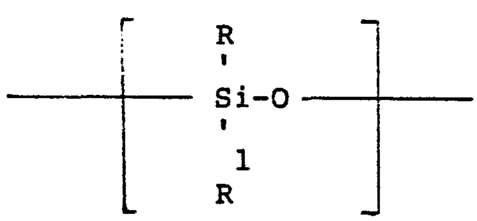

where R and $R^1$ are alkyl groups having 1-6 carbon atom, phenyl groups or hydroxyl groups and contains sufficient number of hydroxyl groups to provide a silanol content of about 0.5-7% by weight. One preferred resin is Dow Corning's D.C. 840 silicone resin which formed by

hydrolyzing selected amounts of mono, di and tri methyl chlorosilicone, mono, di and tri phenyl chlorosilicone,mono, di and tri propyl chlorosilicone and mono, di and tri amyl chloro-silicone and the resulting products are condensed to form a resin blend having a silanol content of about 1.9-3% by weight. Other polysiloxane which give similar results are Bayer's "Baysilone" Resin P150K, Rhone-Poulenc's "Rhodorsil" 6406X and General Electric's SR-165. These polysiloxanes are proprietary products but are believed to be formed as described above.

Trace amounts of multivalent metal ions of iron, aluminum, zinc and tin from the above pigments or from other sources, such as from the mill or mixing vessel in which the composition was prepared are present in the composition and co-ordinate with the silanol groups of the polysiloxane. The metal ions catalyze the crosslinking reaction between the acrylic polymer and polysiloxane to provide ambient temperature curing of the coating composition after application to a substrate. If the metal ions complexed with the silanol groups are not present, elevated temperatures generally are required to cure the composition.

To insure stability of the coating composition during storage, compounds such as acetyl acetone are added in amounts of about 0.75-3% by weight. The acetyl acetone complexes with metal ions in the composition and prevents catalyzation of the crosslinkiing reaction during storage. Upon application the acetyl acetone volatilizes and allows the metal ions to complex with the silanol groups as described above and catalyze curing of the finish. Other auxiliary stabilizers can also be added such as glycidyloxy alkoxy silanes such as gamma-glycidoxypropyl trimethoxy silane.

Another useful coating composition used to coat electrodes has a film-forming binder of a mixture of a chlorosulfonated polyethylene having a weight average molecular weight of about 75,000 to 300,000 determined by gel permeation chromatography and having a chlorine content of 20 to 50% by weight and a sulfur content of 0.7 to 2.0% by weight;

an epoxy resin; and

a polyamine curing agent selected from the following:

Formula (1)

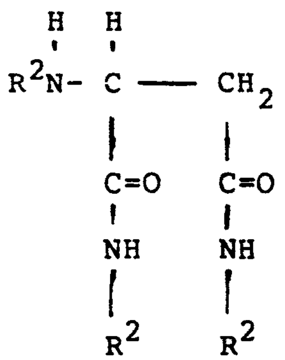

or

Formula (2)

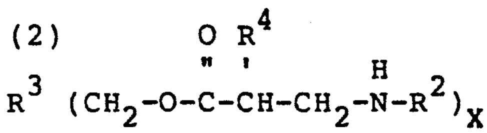

where $R^2$ is $R^5NH_2$ and $R^5$ is an aliphatic or cycloaliphatic hydrocarbon radical, $R^3$ is C or a hydrocarbon group, $R^4$ is H or $CH_3$; when X is 3, $R^3$ is a hydrocarbon group and when x is 4, $R^3$ is C.

The chlorosulfonated polyethylene is a partially chlorinated polyethylene containing sulfonyl chloride groups and has the formula

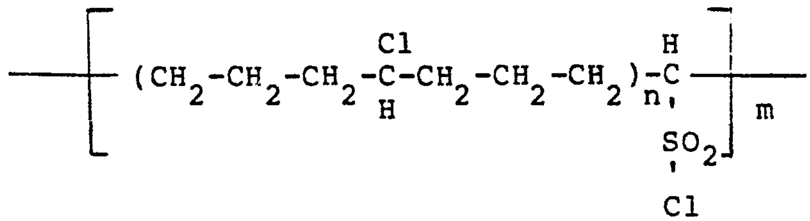

where m and n are positive integers of about 5-25. The polymer has a weight average molecular weight of about 75,000 to 300,000 and preferably, about 100,000 to 150,000 to form a high quality composition. Polymers in the lower end of the molecular weight range are preferred for forming a composition with higher binder content.

The chlorosulfonated polyethylene has a chlorine content of about 20-50% by weight and preferably about 29-43% by weight and a sulfur content of about 0.7 to 2.0% by weight and preferably about 1.1 - 1.5% by weight.

An epoxy resin that can be used in the composition has the formula

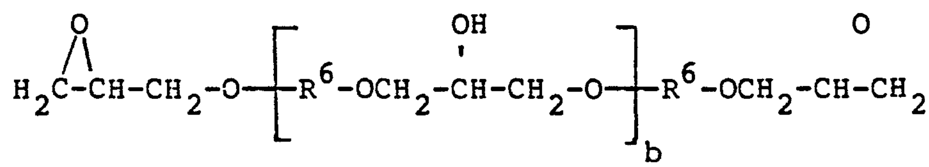

where b is a positive integer of about 0.5 to 4. Preferably, the epoxy resin is the polymerization product of epichlorohydrin and bisphenol A. In a preferred epoxy resin $R^6$ in the above formula is

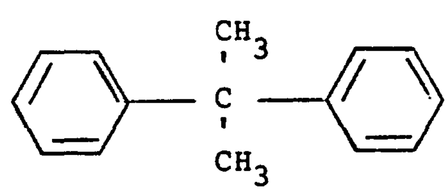

Typical of these preferred epoxy resins are "Epon" 828 having an equivalent weight of about 185-192 manufactured by Shell Chemical Company and DER 331 having an equivalent weight of about 182-190manufactured by The Dow Chemical Company. The equivalent weight is the grams of resin that contain one gram equivalent of epoxide.

An epoxy novolac resin that can be used in the composition has the formula

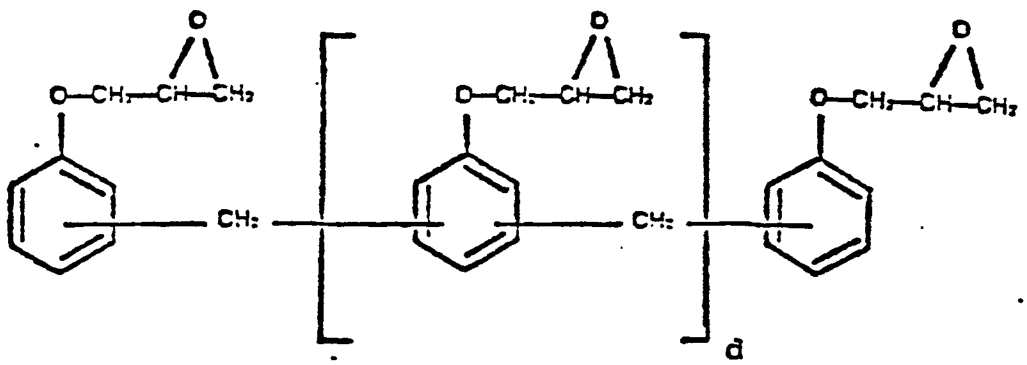

where d is a positive integer of about 0.2-2. Preferred epoxy novolac resin are DEN 431 where d has an average value of 0.2, DEN 438 where d has an average value of 1.6 and DEN 439 where d has an average value of 1.8. These resins are manufactured by the Dow Chemical Company.

The polyamine curing agent of Formula (1) is prepared by reacting 3 moles of an aliphatic or cycloaliphatic polyamine with 1 mole of a dialkyl maleate. Reaction temperatures of about 100-150°C are used for about 1-6 hours to form the curing agent while an alkanol resulting from the reaction is removed.

Typical polyamines used to form the curing agent are isophorone diamine which is 3-aminoethyl-3, 5,5-trimethyl cyclohexylamine, hexamethylene diamine, ethylene diamine, 1,4-clclohexane bis(methylamine), 1,2-diaminopropane, propylene diamine, diethyl ether diamine and trimethyl hexamethyl methylene diamine. Typical dialkyl maleates are dimethyl maleate, diethyl maleate, ethyl methyl maleate, dipropyl maleate, dibutyl maleate and the like.

One preferred curing agent is the reaction product of isophorone diamine and dimethyl maleate and has the following structural formula:

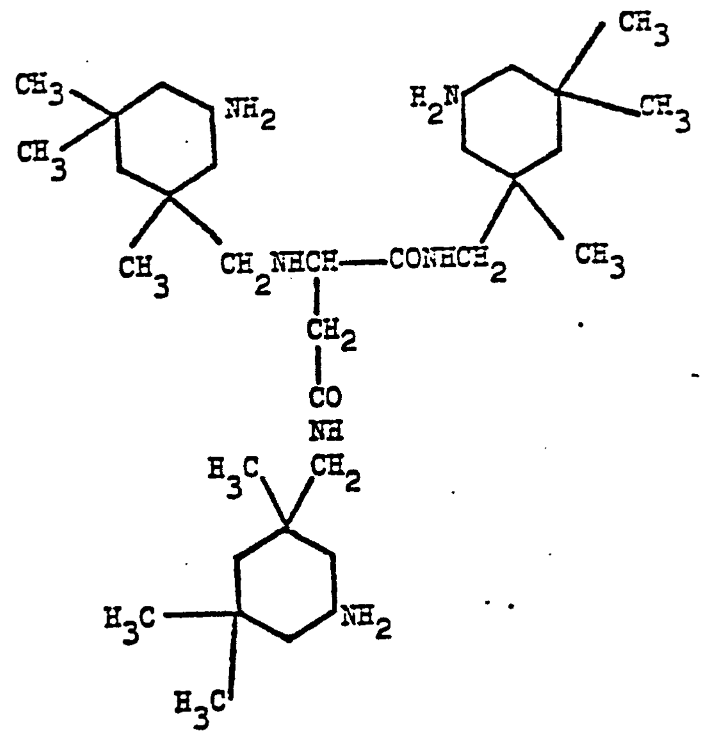

The polymine curing agent of Formula (2) is prepared through a Michael's reaction in which a multifunctional acrylate or methacrylate is reacted with a polyamine. In the preparation of the curing agent, the polyamine is heated to about 100-150°C and then the multifunctional acrylate or methacrylate is reacted with the polyamine for a 1-6 hour period to form a polyamine curing agent.

Typical multifunctional acrylates or methacrylates that can be used to form the curing agent are trimethylol propane acrylate, trimethylol propane methacrylate, trimethylolbutane methacrylate or acrylate, pentaerythritol acrylate, pentaerythritol methacrylatae and the like. In Formula (2), typically $R^3$ is either C or a hydrocarbon group having 2-4 carbon atoms.

The above amines are used to form this curing agent. Isophorone diamine is preferred.

Preferred polyamine curing agents are the reaction product of the following: isophorone diamine and trimethylol propone acrylate; isophorone diamine and pentaerythritol acrylate; hexamethylene diamine and trimethylol propane acrylate, and hexamethylene diamine and pentaerythritol acrylate.

To form an ambient temperature curing composition about 0.1-3% by weight based on the weight of the binder, of a bicyclic amidine is used in the composition. The bicyclic amidine also significantly extends the "pot life" of the composition after all of the constituents of the composition are mixed together. Preferably, about 0.2-3% by weight, based on the weight

of the binder, of the bicyclic amidine is used. One preferred bicyclic amidine is 1,8-diaza-bicyclo-(5,4,0)-undecene-7.

About 1 to 4% by weight, based on the weight of the binder, of phenol can be added to the composition to decrease curing time and enhance toughness of the resulting finish.

Preferably, the binder of an ambient temperature curing composition contains 40-85% by weight of the chlorosulfonated polyethylene, 9-44% by weight of epoxy resin, 3-20% by weight of the polyamine curing agent, and 0.1-3% by weight of bicyclic amidine.

In the place of the bicyclic amidine, about 0.1-3% by weight, based on the weight of the binder, of a strong organic base can be used. Typically useful bases are tertiary alkyl ammonium hydroxide such as tertiary ethyl, propyl or butyl ammonium hydroxide, tertiary alkyl ammonium methoxide such as tertiary ethyl propyl or butyl ammonium hydroxide.

Preferably, solvents used in the composition are chosen to provide curing at ambient temperatures and have a high evaporation rate at these temperatures. Typically useful solvents are as follows: alcohols such as methanol, ethanol, propanol, isopropanol, benzyl alcohol, acetates such as ethyl acetate and other solvent such as toluene, xylene, and the like.

In the place of the chlorosulfonated polyethylene used in the above composition, a chlorosulfonated ethylene vinyl acetate polymer can be used. These chlorosulfonated ethylene vinyl acetate polymers contain about 10-30% by weight of polymerized vinyl acetate,

having a melt index of about 350-10,000, contain about 40-48% by weight chlorine and up to 3% by weight sulfur present as combined sulfonyl chloride groups.

One preferred chlorosulfonated ethyle vinyl acetate polymer contains 10-30% by weight, preferably about 16-26% by weight, of polymerized vinyl acetate. The polymer has a melt index of about 350-10,000, preferably 400-1000. The melt index is determined by ASTM D1234-65T, revised 1985 (condition E). The polymer contains about 40-48% by weight, preferably 42-46% by weight, chlorine. The polymer contains up to about 3% preferably 0.5-2% by weight sulfur as sulfonyl chloride.

Another useful coating composition used to coat electrodes has as the film-forming binder the following:

a fluorocarbon polymer of vinylidene fluoride and hexafluoropropylene and has a weight average molecular weight of about 50,000-600,000;

a metallic oxide such as lead oxide which is an acid acceptor and

a polyamine curing agent of Formulas (1) or (2) described above.

The fluorocarbon polymer is of polymerized monomers of vinylidene fluoride and hexafluoropropylene. Preferably, the polymer contains about 50-70% by weight of vinylidene fluoride and 30-50% by weight of hexafluoropropylene. The polymer can contain up to 40% by weight of other monomers such as tetrafluoroethylene. One useful polymer contains about 20-30% by weight of tetrafluoroethylene.

The fluorocarbon polymer has a weight average molecular weight of about 50,000-600,000. Preferably, fluorocarbon polymers are used that have a weight average molecular weight of about 75,000-450,000. Fluorocarbon polymers having a weight average molecular weight of 50,000-300,000 are useful. Two particularly useful fluorocarbon polymers have weight average molecular weight of about 75,000-125,000 and 150,000-250,000. Polymers in the lower end of the molecular weight range are preferred for forming a composition with higher binder content. Fluorocarbon polymers in the higher molecular weight range of 300,000-450,000 are also very useful for forming coating compositions.

A metallic oxide which is an acid acceptor is used in the composition to react with the hydrofluoric acid which is generated during the curing or crosslinking reaction. Typical metallic oxides are magnesium oxide, lead oxide, calcium oxide, lead hydrogen phosphite and a mixture of calcium oxide and magnesium oxide. Lead oxide is preferred.

In the aforementioned compositions that contain chlorosulfonated poyethylene, chlorosulfonated ethylene vinyl acetate polymers or fluorocarbon polymers of vinylidene fluoride and hexafluoropropylene, conventional curing agents can be used in place of the polyamine curing agents described above. Generally, curing at elevated temperatures of 40-70°C is required with the conventional curing agents. Typical conventional curing agents are lead compounds, such as litharge or other lead oxides, tribasic lead maleate and the like.

Coating compositions of other poymers, such as polytetrafluoroethylene, copolymer of tetrafluoroethylene/perfluoro alkoxy vinyl ether, copolymer of tetrafluoroethylene/hexafluoropropylene, polyvinylidene fluoride, fluorinated dioxole polymer, copolymer of fluorinated dioxole/tetrafluoroethylene, copolymer of fluorinated dioxole/vinylidene fluoride, or copolymer of fluorinated dioxole/chlorotrifluoroethylene can be used to coat electrodes.

The coating composition can be applied to the electrode by using conventional techniques such as spraying, dipping, brushing, roller coating, flow coating and the like and dried at ambient temperatures or baked at temperatures of 50-250°C to give a coating about 10-200 microns thick, preferably about 20-100 microns thick.

Typically, the grids of lead-acid storage batteries are made from antimony lead alloys or calcium lead alloys. Preferably, a thin coat of an aminosilane, such as gamma glycidoxy trimethoxysilane, N-(2-aminoethyl)-3-amino-propyl trimethoxysilane or 3[2(vinyl benzyl amino)ethylamino] propyltrimethoxy silane is applied and then one of the above compositions is applied. The composition has excellent adhesion to the amino silane coated alloy grids.

Batteries made from such coated grids have a life 2-3 times that of batteries made with uncoated grids. Alternatively, thinner coated grids can be used which reduces battery size and weight by half to a third without decreasing the life of the battery in comparison to a battery made with uncoated grids. By maintaining the size and weight of the battery to that of a

conventional battery but using 2-3 times the number of the thinner coated grids, the power output of the battery can be increased by 2-3 times in comparison to a conventional battery made with uncoated grids.

Electrodes of stainless steel or titanium can be coated with one of the above compositions. Also plastic electrodes, which are not corroded by electrolyte used in the cell, battery or electrochemical process, can be coated with a conductive layer of material and then coated with one of the above compositions.

The following examples illustrate the invention. All parts and percentages are on a weight basis. Molecular weights are determined by gel permeation chromatography using polymethyl methacrylate as a standard.

## EXAMPLE 1

A conductive paint was prepared by blending the following constituents together and charging the resulting blend into a sand mill and grinding 4 passes through the mill:

| | Parts by Weight |
|---|---|
| Acrylic Resin Solution (48.4% volume solids of a polymer of 15% sytrene, 10% butyl acrylate, 55% butyl methacrylate and 20% glycidyl methacrylate, the polymer has a number average molecular weight of about 15,000 and a weight average molecular weight of about 42,000) | 546.0 |

| | Parts by Weight |
|---|---|
| Dow Corning's D.C. 840 proprietary polysiloxane solution (believed to be 60% solids in toluene of a blend of polysiloxanes which are formed by the hydrolysis of select amounts on mono, di and tri methyl, propyl, amyl and phenyl chlorosilicones which are condensed to form a resin having a silanol content of about 1.9-3%.) | 214.5 |
| Gamma-glycidoxypropyl trimethoxysilane | 4.3 |
| Carbon black pigment (Gulf acetylene black pigment) | 107.2 |
| Finely divided graphite (Graphite 200-9) | 321.7 |
| Toluene | 1554.7 |
| Methanol | 85.4 |
| Acetylacetone | 28.5 |
| Total | 2862.3 |

The resulting paint has a weight solids of 30% and a pigment to binder weight ratio of 100/100. The paint was reduced to a 25 second spray viscosity measured with a No. 2 Zahn cup with a 80/20 mixture of propylene glycol methyl ether acetate/xylene. The paint was sprayed onto a glass panel to a 25 micron dry film thickness and the electrical resistance was measured and was about 5-7 ohms.

A calcium alloy grid and an antimony alloy lead grid used in storage batteries were first coated with a 2% solution of gamma-aminopropyl trimethoxysilane and

dried and then sprayed with the above paint and baked at about 65°C for about 1 hour. The resulting film was about 40 microns thick and had excellent adhesion to the lead substrate.

The coated lead grids were immersed in sulfuric acid solution and held at 2.3 volt potential for 4 weeks. The coating did not blister or deteriorate and no corrosion of the substrate was noted. In comparison, uncoated lead grids exposed under the same conditions corroded severely.

Lead-acid storage batteries made with the coated lead grids are expected to have a life of about 2-3 times that of batteries made with uncoated lead grids. Lead-acid storage batteries can be made with grids that are 1/3-1/2 of the weight of conventional uncoated grids and can be expected to have a life equivalent to that of a conventional battery. Also, lead-acid storage batteries can be made of the same size as conventional batteries but with substantially more power since the grids can be made thinner and more grids can be used in the battery; hence, increasing power of the battery.

## EXAMPLE 2

The following constituents were blended together and charged into a ball mill and ground until a uniform dispersion was formed:

| | Parts by Weight |
|---|---|
| Chlorosulfonated polyethylene solution (25% solids in toluene solvent of a chlorosulfonated polyethylene having a weight average molecular weight of about 115,000 determined by gel permeation chromatography and contains about 43% chlorine and about 1.4% sulfur) | 98.7 |

| | Parts by Weight |
|---|---|
| Toluene | 296.0 |
| D.E.R. 331 epoxy resin (liquid epoxy resin of bisphenol A and epichlorohydrin having an epoxide equivalent weight of about 182-190 and a viscosity measured at 25°C of 11,000-14,000 cps) | 42.4 |
| Carbon black pigment (Gulf acetylene black pigment) | 37.2 |
| Graphite 200-9 (finely divided graphite) | 111.7 |
| Ethyl acetate | 82.8 |
| Toluene | 331.2 |
| Total | 1000.0 |

Composition A was prepared by blending together the following constituents:

| | |
|---|---|
| Polyamine curing agent solution (55% solids in isopropanol of the reaction product of 3 moles of isophorone diamine and dimethyl maleate) | 13.26 |
| Bicyclic amidine [1,8-diazabicyclo(5,4,0)undecene-7] | 3.06 |
| Toluene/Ethyl acetate (50/50 blend) | 172.00 |
| Total | 188.32 |

Composition A was thoroughly blended with 300 parts of the pigment dispersion prepared above and reduced with toluene/ethyl acetate to a spray viscosity of about 25 seconds measured with a No. 2 Zahn cup to form a paint. The paint was sprayed onto a glass panel to a 25 micron dry film thickness and the electrical resistance was measured and was about 5-7 ohms.

A calcium alloy lead grid and an antimony alloy lead grid used in storage batteries were first coated with a 2% solution of gamma-aminopropyl trimethoxysilane and dried and then sprayed with the above paint and baked at about 65°C for about 1 hour. The resulting film was about 40 microns and had excellent adhesion to the lead substrate.

The coated lead grids were immersed in sulfuric acid solution and held at a 2.3 volt potential for 4 weeks. The coating did not blister or deteriorate. Uncoated lead alloy grids showed severe deterioration in the same 4 week period under the same conditions.

Lead-acid storage batteries made with the coated lead grids are expected to have a life of about 2-3 times that of batteries made with uncoated lead grids. Lead-acid storage batteries can be made with grids that are 1/3-1/2 of the weight of conventional uncoated grids and can be expected to have a life equivalent to that of a conventional battery. Also, lead-acid storage batteries can be made of the same size as conventional batteries but with substantially more power since the grids can be made thinner and more grids can be used in the battery.

## EXAMPLE 3

The following constituents were blended together and charged into a ball mill and ground until a uniform dispersion was formed:

| | Parts by Weight |
|---|---|
| Chlorosulfonated ethylene vinyl acetate polymer solution (25% solids in toluene solvent of a chlorosulfonated ethylene vinyl acetate polymer having a vinyl acetate content of 16-26% by weight, a melt index determined according to ASTM D1234-65T of 400-1000, a chlorine content of 42-46% by weight and a sulfur content of about 0.5-2% by weight as sulfonyl chloride) | 98.7 |
| D.E.R. 331 Epoxy Resin (described in Example 2) | 42.4 |
| Toluene | 296.0 |
| Carbon black pigment (Gulf acetylene black pigment) | 37.2 |
| Graphite 200-9 (finely divided graphite) | 111.7 |
| Ethyl acetate | 82.8 |
| Toluene | 331.2 |
| Total | 1000.0 |

Composition B was prepared by blending together the following constituents:

| | |
|---|---|
| Polyamine curing agent solution (described in Example 2) | 13.26 |
| Bicyclic amidine (described in Example 2) | 3.06 |
| Toluene/ethyl acetate | 172.00 |
| Total | 188.32 |

Composition B was thoroughly blended with 300 parts of the above pigment dispersion and reduced with

toluene/ethyl acetate to a spray viscosity of about 25 seconds measured with a No. 2 Zahn cup to form a paint. A portion of the paint was sprayed onto a glass panel to 25 micron dry film thickness. The electrical resistance was measured and was about 5-7 ohms.

A calcium alloy lead grid and an antimony alloy lead grid used in storage batteries were first coated with a 2% solution of an amino silane described in Example 2 and dried and then sprayed with the above paint and baked at about 65°C for about 1 hour. The resulting film was about 40 microns and had excellent adhesion to the lead substrate.

The coated grids were immersed in sulfuric acid solution and held at a 2.3 volt potential for 4 weeks. The coating did not blister or deteriorate. Uncoated lead alloy grids showed severe deterioration in the same 4 week period under the same conditions.

Lead-acid storage batteries made with the coated lead grids are expected to have a life of about 2-3 times that of batteries made with uncoated lead grids. Lead-acid storage batteries can be made with grids that are 1/3-1/2 of the weight of conventional uncoated grids and can be expected to have a life equivalent to that of a conventional battery. Also, lead-acid storage batteries can be made of the same size as conventional batteries but with substantially more power since the grids can be made thinner and more grids can be used in the battery.

## EXAMPLE 4

A coating composition was prepared as follows:

| | | Parts by Weight |
|---|---|---|
| Fluorocarbon polymer solution (33% solids solution in ethyl acetate of a copolymer of 60% vinylidene fluoride and 40% hexafluoropropylene having a weight average molecular weight of about 100,000) | | 3000 |
| Lead oxide | | 5 |
| Carbon black pigment (Gulf acetylene black pigment) | | 250 |
| Graphite 200-9 (finely divided graphite) | | 750 |
| Methyl ethyl ketone | | 1250 |
| Butyl acetate | | 1250 |
| | Sub Total | 6505 |
| Portion 2 | | |
| Polyamine curing agent (described in Example 2) | | 30 |
| | Total | 6535 |

The constituents of Portion 1 were blended and charged into a ball mill and ground until a uniform dispersion was formed. Portion 2 was then added and thoroughly mixed. The resulting composition was reduced with methyl ethyl ketone to a spray viscosity of about 25 seconds measured with a No. 2 Zahn cup to form a paint. The paint was sprayed onto a glass panel to a 25 micron dry film thickness and the electrical resistance was measured and was about 5-7 ohms.

A calcium alloy lead grid and an antimony alloy lead grid used in storage batteries were first coated

with a 2% solution of gamma-aminopropyl trimethoxysilane and dried and then sprayed with the above paint and baked at 65°C for about 1 hour. The resulting film was about 40 microns and had excellent adhesion to the lead substrate.

The coated lead grids were immersed in sulfuric acid solution and held at a 2.3 volt potential for 4 weeks. The coating did not blister or deteriorate. Uncoated lead alloy grids showed severe deterioration in the same 4 week period under the same conditions.

Lead-acid storage batteries made with the coated lead grids are expected to have a life of about 2-3 times that of batteries made with uncoated lead grids. Lead-acid storage batteries can be made with grids that are 1/3-1/2 of the weight of conventional uncoated grids and can be expected to have a life equivalent to that of a conventional battery. Also, lead-acid storage batteries can be made of the same size as conventional batteries but with substantially more power since the grids can be made thinner and more grids can be used in the battery.

CLAIMS

1. A lead-acid storage battery wherein the grids of the electrodes are coated with a protective electronically conductive coating about 10-200 microns thick, said coating comprising a film-forming binder selected from an acrylic/polysiloxane polymer blend, a chlorosulfonated polyethylene/epoxy resin blend, a chlorosulfonated ethylene vinyl acetate polymer/epoxy resin blend, copolymer of vinylidene fluoride/hexafluoropropylene, polytetrafluoroethylene, copolymer of tetrafluoroethylene/perfluoroalkoxy vinyl ether, copolymer of tetrafluoroethylene/hexafluoropropylene, polyvinylidene fluoride, fluorinated dioxole polymer, copolymer of fluorinated dioxole/tetrafluoroethylene, copolymer of fluorinated dioxole/vinylidene fluoride, copolymer of fluorinated dioxole/chlorotrifluoroethylene; and

electronically conductive, finely divided filler material in a filler-to-binder weight ratio of about 50/100 to 300/100 and the binder containing filler has an electrical volume resistivity of about 0.150 ohm.cm.

2. A lead-acid storage battery according to claim 1 in which the electronically conductive filler is a mixture of carbon black pigment and finely divided graphite.

3. A lead-acid storage battery according to claim 1 or claim 2 wherein the film-forming binder is a blend of about

a. 20-90% by weight, based on the weight of the binder, of an acrylic polymer comprising 10-50% by weight, based on the weight of the acrylic polymer, of polymerized glycidyl methacrylate or glycidyl acrylate and 50-90% by weight of polymerized ethylenically unsaturated monomers selected from an alkyl methacrylate having 1-12 carbon atoms, an alkyl acrylate having 1-12 carbon atoms, styrene, alkyl substituted styrenes and mixtures thereof,

wherein the acrylic polymer has a weight average molecular weight of about 10,000-100,000, and

b. 10-80%, based on the weight of the binder, of a crosslinkable polysiloxane having the following units:

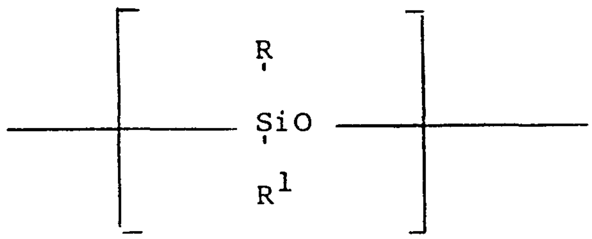

wherein R and $R^1$ are individually selected from the group consisting of alkyl group having 1-6 carbon atoms, hydroxyl groups and phenyl group and contains a sufficient number of hydroxyl groups to provide a silanol content of about 0.57% by weight.

4. A lead-acid storage battery according to claim 3 wherein the acrylic polymer comprises about

10-30% by weight of glycidyl methacrylate,

10-20% by weight of styrene,

50-60% by weight of butyl methacrylate,

5-20% by weight of butyl acrylate.

5. A lead-acid storage battery according to claim 1 or 2, wherein the film-forming binder of the coating on the lead alloy grid comprises

a chlorosulfonated polyethylene having a weight average molecular weight of about 75,000 to 300,000 determined by gel permeation chromatography and having a chlorine content of 20 to 50% by weight and a sulfur content of 0.7 to 2.0% by weight, and

an epoxy resin.

6. A lead-acid storage battery according to claim 5 wherein the chlorosulfonated polyethylene has the formula

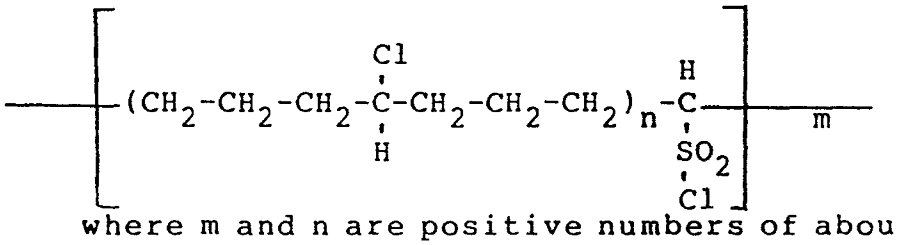

where m and n are positive numbers of about 5-25 and has a weight molecular weight of about 100,000 to 150,000;

and the epoxy resin has the formula

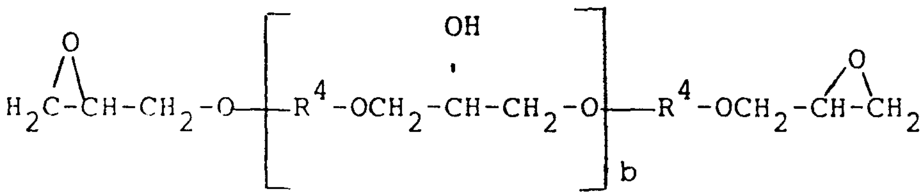

where $R^4$ is an aromatic radical and b is a positive number of about 0.5 to 4.

7. A lead-acid storage battery according to claim 1 or claim 2 wherein the film-forming binder of the coating on the lead alloy grid comprises

a chlorosulfonated ethylene vinyl acetate polymer having about 10-30% by weight of polymerized vinyl acetate, melt index of about 350-10,000, containing about 40-80% by weight chlorine and up to 3% by weight sulfur present as combined sulfonyl chloride groups; and

an epoxy resin.

8. A lead-acid storage battery according to claim 7 wherein the binder comprises

a chlorosulfonated ethylene vinyl acetate polymer containing about 16-26% by weight polymerized vinyl acetate, having a melt index of about 400-1000, containing about 42-46% by weight chlorine and about 0.5-2% by weight sulfur as sulfonyl chloride, and

the epoxy resin has the formula

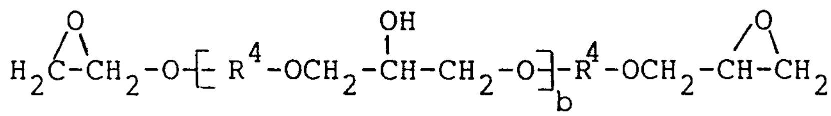

wherein $R^4$ is an aromatic radical and b is a positive integer of about 0.5 to 4.

9. A lead-acid storage battery according to claim 1 or 2 where the film-forming binder of the coating on the lead alloy grid comprises

a fluorocarbon polymer of vinylidene fluoride and hexafluoropropylene and has a weight average molecular weight of about 50,000 - 600,000.

10. An electrode for use in electrochemical reactions comprising

a conductive substrate coated with an electronically conductive coating about 10-200 microns thick; said coating comprising a film-forming binder selected from an acrylic/polysiloxane polymer blend, a chlorosulfonated polyethylene/epoxy resin blend, a chlorosulfonated ethylene vinyl acetate polymer/epoxy resin blend, a copolymer of vinylidene fluoride/hexafluoropropylene, polytetrafluoroethylene copolymer of tetrafluoroethylene/perfluoroalkoxy vinyl ether, copolymer of tetrafluoroethylene/hexa fluoropropylene, polyvinylidene fluoride, fluorinated dioxole polymer, copolymer of fluorinated dioxole/-

tetrafluoroethylene, copolymer of fluorinated dioxole/vinylidene fluoride, copolymer of fluorinated dioxole/chlorotrifluoroethylene; and

electronically conductive, finely divided filler material in a filler-to-binder weight ratio of about 50/100 to 300/100 and the binder containing filler has an electrical volume resistivity of about 0.1-50 ohm.cm.

11. An electrode according to claim 10, in which the substrate is a non-conductive plastic base having a conductive coating thereon.

12. An electrode as claimed in claim 10 or claim 11, in which the conductive finely divided filler material is a transition metal oxide selected from lead dioxide, magnetite, titanium suboxide of the formula $TiO_x$ where x is less than 2, ruthenium oxide and mixtures thereof.

European Patent Office

# EUROPEAN SEARCH REPORT

0191248
Application number

EP 85309483.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US - A - 4 237 195 (ALFENAAR) * Column 1, line 65 - column 2, line 65 * | 1-8,10 | H 01 M 4/68<br>H 01 M 10/06<br>C 25 B 11/04<br>C 25 C 7/02<br>B 32 B 7/02<br>B 32 B 15/04 |
| A | US - A - 3 600 230 (STACHURSKI et al.) * Claims 1,6 * | 1,9,10 | |
| A | DE - A1 - 2 747 334 (BASF) * Claim 1; page 3, lines 2-28 * | 1-3,10, 12 | |
| A | DE - B2 - 2 533 822 (BASF) * Claim 1; column 1, line 60 - column 2, line 22 * | 1-3,10, 12 | |

TECHNICAL FIELDS SEARCHED (Int. Cl.4)

H 01 M
C 25 B
C 25 C
C 25 D

The present search report has been drawn up for all claims

| Place of search | Date of completion of the search | Examiner |
|---|---|---|
| VIENNA | 15-04-1986 | LUX |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82